# EUROPÄISCHE PATENTANMELDUNG

(11) **EP 4 382 774 A1**
(43) Veröffentlichungstag der Anmeldung: **12.06.2024**
(21) Anmeldenummer: 22212416.6
(22) Anmeldetag: 09.12.2022
(51) Int. Cl.: F16H 55/17

(54) **VERFAHREN ZUM INSTANDSETZEN EINES GEZAHNTES GETRIEBEELEMENTS**

(71) Anmelder: Flender GmbH, 46395 Bocholt (DE)
(72) Erfinder: Flaswinkel, Daniel, 46395 Bocholt (DE); Dinter, Ralf Martin, 46395 Bocholt (DE)
(74) Vertreter: Michalski Hüttermann & Partner Patentanwälte mbB

(57) **Zusammenfassung**

Die Erfindung betrifft ein Verfahren zum Instandsetzen eines mit einer Mehrzahl Zähnen 12 gezahnten Getriebeelements 10. Bei dem Getriebeelement 10 kann es sich um ein Zahnrad handelt. Der zumindest eine Zahn 12 wird mittels eines Schneidverfahrens von einem Grundkörper 16 entlang der Schnittkontur 14 entfernt und als Ersatz des zumindest einen entfernten Zahns 12 wird zumindest ein neuer Zahn 12 mittels Auftragsschweißen gebildet. Es kann bei geringerem Materialeinsatz und in kurzer Zeit die Funktionsfähigkeit eines Zahnrades 10 wiederhergestellt werden.

## Beschreibung

Die Erfindung betrifft ein Verfahren zum Instandsetzen eines mit einer Mehrzahl Zähnen gezahnten Getriebeelements. Bei dem Getriebeelement kann es sich um ein Zahnrad handelt.

Es ist bekannt, Getriebeelemente aus Einsatzstahl herzustellen und dabei die Verzahnung über Einsatzhärten mit einer besonders harten Oberfläche zu versehen. Die Beschaffungszeiten für Rohlinge für große Zahnräder sind teilweise sehr lang und führen zu langen Ausfallzeiten der Maschinenkomponente, beispielsweise ein Industriegetriebe, wenn an einem der Zähne eine Beschädigung aufgetreten ist oder ein Zahn sogar gebrochen ist. Aus der EP 3 891 418 B1 ist ein Zahnrad bekannt, dessen kreisrunder Kern mittels eines Urformprozesses gebildet wird und dessen Zähne mittels eines additiven Fertigungsverfahrens angeformt sind. Ausgehend hiervon besteht ein Bedürfnis nach einer Möglichkeit der Einzelzahnreparatur in einem Schadensfall, bei dem lediglich ein Zahn eines Zahnrades beschädigt oder gebrochen ist.

Es ist die Aufgabe der Erfindung ein Verfahren bereitzustellen, das das Instandsetzen zumindest eines Zahns an einem Getriebeelement ermöglicht.

Die Lösung der Aufgabe erfolgt durch ein Verfahren mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

In einer Ausführungsform des Verfahrens zum Instandsetzen eines mit einer Mehrzahl Zähnen gezahnten Getriebeelements ist vorgesehen, dass ein in einem Bereich zumindest eines Zahns beschädigtes Getriebeelement bereitgestellt wird, eine Schnittkontur festgelegt wird, die zumindest zwischen einem Grundkörper des Getriebeelements und dem zumindest einen Zahn verläuft, der zumindest eine Zahn mittels eines Schneidverfahrens von dem Grundkörper entlang der Schnittkontur entfernt wird und als Ersatz des zumindest einen entfernten Zahns zumindest ein neuer Zahn mittels Auftragsschweißen gebildet wird.

Das Getriebeelement kann als Zahnrad oder als Zahnstange ausgeführt sein. Ist das Getriebeelement als Zahnrad ausgeführt, dann handelt es ich bei dem Grundkörper um einen Radkörper. Das Getriebeelement, das einer Instandsetzung zu unterziehen ist, ist bevorzugt herkömmlich hergestellt, d.h. es ist aus einem Einsatzstahl hergestellt worden und anschließend über Einsatzhärten im Bereich der Zahnoberflächen gehärtet worden.

Der Begriff Instandsetzen kann auch mit Reparieren gleichgesetzt werden. Instandsetzen ist jedenfalls dann gegeben, wenn das betroffenen Teil bzw. das Getriebeelement im Wesentlichen unverändert bleibt und anschließend wiederverwendet wird. Von der Instandsetzung ist nur ein kleiner Bereich des Teils bzw. des Getriebeelements betroffen. Dennoch kann ein Instandsetzen erforderlich sein, da der Defekt des verhältnismäßig kleinen Bereichs eine signifikante bzw. überdurchschnittliche Funktionseinschränkung oder sogar einen Funktionsverlust bedeutet.

Die Schnittkontur bezeichnet den Grundverlauf des mittels des Schneidverfahrens entfernten Bereichs des Getriebeelements. Nach erfolgtem Entfernen des beschädigten Bereichs des Getriebeelements ist die Schnittkontur folglich eine Oberfläche des Getriebeelements und in dem nächsten Schritt wird auf dieser Oberfläche des Getriebeelements neues Material, zweckmäßigerweise ein neuer Zahn, mittels Auftragsschweißen aufgebaut und gebildet. Über das vorherige Festlegen der Schnittkontur wird gewährleistet, dass der ehemals aufgekohlte und bis in eine gewisse Tiefe gehärte Oberflächenbereich des Getriebeelements entfernt wird und das Getriebeelement in diesem Bereich für das Auftragsschweißen des neuen Materials vorbereitet ist. Ein aufgekohlter Bereich ist in der Regel ein Randbereich mit lokal erhöhtem Kohlenstoffanteil.

Der Verfahrensschritt des Auftragsschweißens kann durch Laserauftragsschweißen, Pulverauftragsschweißen oder Drahtauftragsschweißen durchgeführt werden. Als Schweißzusatzwerkstoff kann Draht oder Pulver eingesetzt werden. Als Energiequelle kann ein Laser oder ein Lichtbogen Verwendung finden. Hierbei ist insbesondere vorgesehen, dass der über das Auftragsschweißen hergestellte Ersatzzahn mit mehreren gradierten Schichten zur Erzeugung eines Härtegradienten über eine Materialdicke ohne dedizierte Wärmebehandlung hergestellt wird. Da die Tragfähigkeit des gesamten Zahnrades bzw. des ganzen Getriebes von der Tragfähigkeit des schwächsten Zahns abhängt, kann so bei geringeren Kosten, geringerem Materialeinsatz und in kurzer Zeit die Funktionsfähigkeit eines Zahnrades wiederhergestellt werden. Das beanspruchte Verfahren verfolgt das Konzept einer Einzelzahnreparatur, durch die erreicht wird, dass anschließend das gesamte Getriebeelement wieder funktionsfähig ist. Unabhängig vom Ausmaß und der Tiefe der Beschädigung sollte der durch den Einsatzhärteprozess entstandene Bereich mit höherer Kohlenstoff-Konzentration entfernt werden, um eine gute Schweißbarkeit zu gewährleisten.

In einer möglichen Verfahrensvariante kann vorgesehen sein, dass die Schnittkontur beidseitig des zumindest einen Zahn in dem jeweiligen Bereich des Zahnfußes ansetzt. Hierbei ist unter dem Begriff "ansetzen" der Verlauf der Schnittkontur zu verstehen, mit dem diese an der Materialoberfläche endet bzw. an welche Stelle der Materialoberfläche die Schnittkontur in das Material eintritt und an ihrem anderen Ende wieder an die Oberfläche kommt. In einer insbesondere bevorzugten Ausführung setzt die Schnittkontur mittig in dem jeweiligen Bereich des Zahnfußes an. Hierdurch ist sichergestellt, dass nur ein geringer thermischer Einfluss im Bereich der 30°-Tangente zu erwarten ist und damit noch eine hohe Tragfähigkeit im Bereich des Zahnfußes gegeben ist.

In einer weiteren möglichen Verfahrensvariante kann vorgesehen sein, dass die Schnittkontur entlang zumindest einer Zahnflanke bis zu einem Zahnkopf eines benachbarten Zahns erweitert wird und der Zahn und die zumindest eine benachbarte Zahnflanke entlang der Schnittkontur entfernt wird. Insbesondere ist bevorzugt, dass die Schnittkontur entlang der jeweiligen Zahnflanken bis zu dem jeweiligen Zahnkopf der beiden benachbarten Zähne erweitert wird und der Zahn und die benachbarte Zahnflanken entlang der Schnittkontur entfernt werden. Hierbei wird die Verbindung zwischen den beiden unbeschädigten, benachbarten Zähnen und dem zu reparierenden Zahn auf die Zahnköpfe der benachbarten Zähne gelegt. Der Zahnkopf ist der einzige nicht hoch belastete Bereich auf dem Profil einer Verzahnung. Bevorzugt ist folglich, dass die Schnittkontur entlang der zumindest einen Zahnflanke bis zur Mittelebene des jeweiligen Zahns verläuft. Sowohl die Zahnflanke als auch die Zahnfußrundung bleiben entweder unverändert oder werden neu aufgeschweißt und verfügen so über homogenere Materialeigenschaften und Festigkeiten wie bei Anbindung in anderen Bereichen.

Bei einer besonders bevorzugten Verfahrensausgestaltung wird die Schnittkontur bezogen auf eine Oberfläche des zumindest einen Zahns in einer Tiefe des Materials festgelegt, die einem Maß entspricht bis zu dem in einem zuvor durchgeführten Einsatzhärteprozess eine erhöhte Kohlenstoffkonzentration eingebracht wurde. Hierbei kann beispielsweise vorgesehen sein, dass der aufgekohlte Oberflächenbereich bis in eine Tiefe der zweifachen Einhärtetiefe entfernt bzw. abgetragen wird.

Bevorzugt ist ein Schneidverfahren, das als thermisches Schneiden, abtragendes Schneiden, abtragendes, mechanisches Schneiden oder Funkenerodieren durchgeführt wird. Für den Verfahrensschritt, in dem mittels Auftragsschweißen ein neuer Zahn gebildet wird, ist bevorzugt, dass der zumindest eine neue Zahn mindestens einen mit einem ersten Material gebildeten Teilbereich sowie mindestens einen mit einem zweiten Material additiv gebildeten Randbereich aufweist, bei welchem das zweite Material eine größere Härte als das erste Material aufweist.

Die Aufgabe wird ferner gelöst durch ein Getriebe mit mindestens einem nach einer zuvor beschriebenen Verfahrensausgestaltung instandgesetzten Getriebeelement.

Auch wird die Aufgabe gelöst durch eine Maschine, insbesondere eine elektrische Maschine mit einem Getriebe, das ein nach einer zuvor beschriebenen Verfahrensausgestaltung instandgesetztes Getriebeelement umfasst. Die elektrische Maschine kann als Generator oder Elektromotor ausgeführt sein.

Schließlich wird die Aufgabe auch gelöst durch eine Turbine, insbesondere als Windkraftturbine oder Gasturbine oder Fluggasturbine ausgeführt, mit einem Getriebe und/oder einer elektrischen Maschine wie diese zuvor beschrieben wurden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1a), 1b): ein Getriebeelement in Gestalt eines Zahnrades für eine erste Reparaturvariante,
Fig. 2a), 2b): ein Getriebeelement in Gestalt eines Zahnrades für eine zweite Reparaturvariante und
Fig. 3: eine schematische Darstellung eines Verfahrens zum Instandsetzen eines gezahnten Getriebeelements.

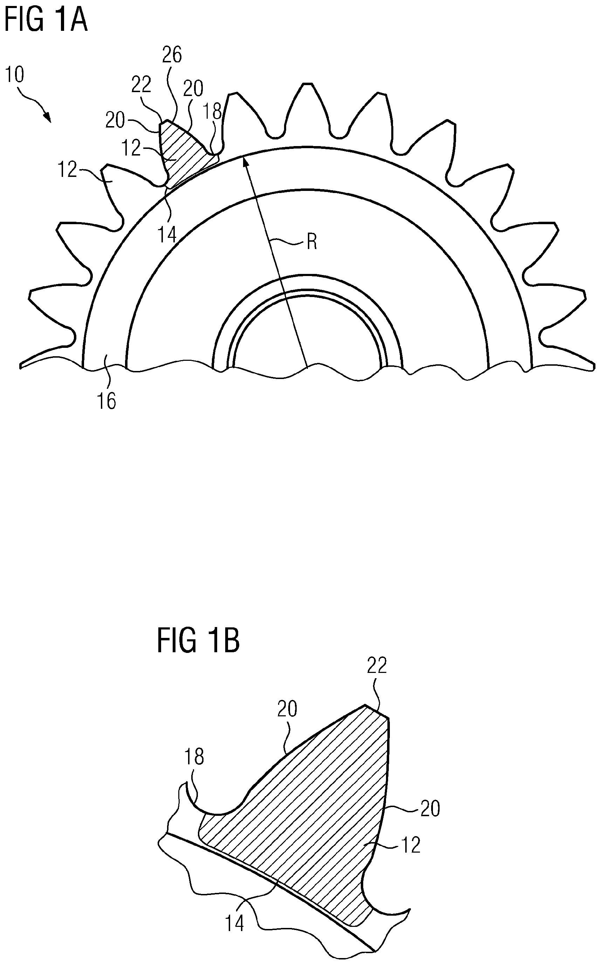

Die Figuren 1a) bis 2b) zeigen ein Getriebeelement in Gestalt eines Zahnrades schematisch in einer Prinzipskizze. Die Figuren 1a) und 2a) zeigen eine hälftige Axialansicht des Zahnrades und die Figuren 1b) und 2b) zeigen eine Detaillierung eines Zahns bzw. eines Zahns und benachbarter Zahnflanken. Die Figuren werden zunächst zusammen beschrieben.

Das dargestellte Getriebeelement 10 in Gestalt eines Zahnrades 12 kann Bestandteil einer elektrischen Maschine in Form eines Generators einer Windkraftturbine sein. In weiteren Ausführungsbeispielen kann das Zahnrad 12 Bestandteil eines Getriebes einer Gasturbine oder einer Fluggasturbine oder eines Motors sein und entspricht im Übrigen dem dargestellten Ausführungsbeispiel.

Das Zahnrad 12 ist in Zeichenebene, d.h. um eine senkrecht auf der Zeichenebene stehende Drehachse, welche allerdings nicht dargestellt ist, drehbeweglich. Wie dargestellt, ist das Zahnrad 12 mit außenumfänglich um diese Drehachse herum angeordneten Zähnen 12 gezahnt. Die Zähne 12 erstrecken sich von einem im Wesentlichen kreisrunden Grundkörper 16 radial, das heißt in radialer Richtung R, nach außen fort.

Das Zahnrad 12 kann zunächst in einem regulären Fertigungsverfahren gebildet werden, indem ein Rohling, der den Grundkörper 16 und die umfänglichen Zähne 12 umfasst und einen geringen Kohlenstoffgehalt im Werkstoff aufweist, oberflächlich aufgekohlt und anschließend gehärtet wird. Das Zahnrad 12 weist hiernach eine oberflächlich besonders harte und verschleißarme Verzahnung auf und ist im Übrigen hinreichend weich, d. h. duktil, ausgebildet.

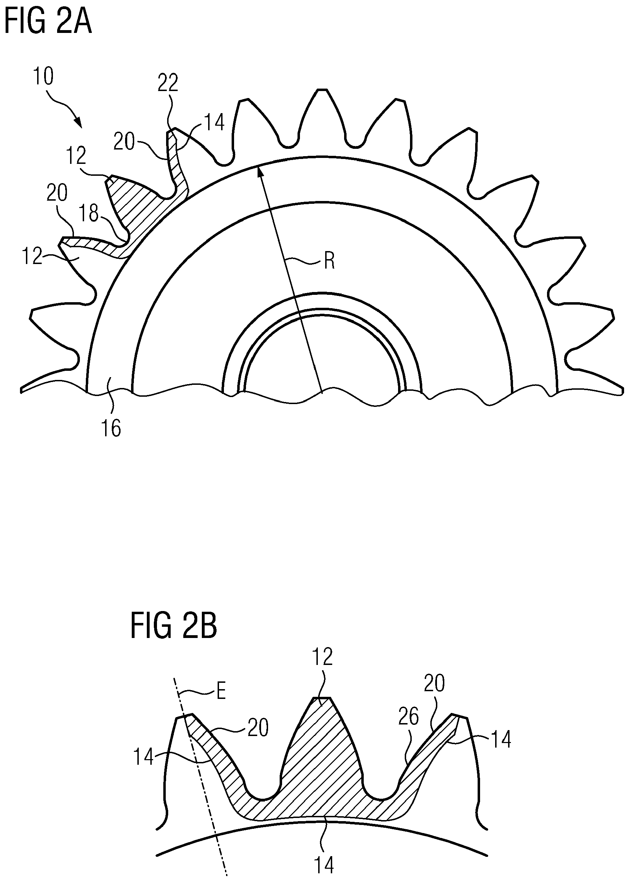

Für die folgende Beschreibung soll angenommen werden, dass der jeweils in den Figuren 1a) bis 2b) schraffiert dargestellte Zahn 12 schadhaft ist und mittels des erfindungsgemäßen Verfahrens instandgesetzt werden sollen. Hierbei kann der Schaden in einem oberflächlichen Schaden auf einer der Zahnflanken 20 eines Zahns 12 bestehen oder auch in einem abgebrochen Zahn 12 an sich bestehen, was vorliegend aber nicht eigens dargestellt ist. Die Figuren 1b) und 2b) zeigen den als schadhaft angenommenen Zahn 12 in jeweiliger Detaillierung, wobei auf die Besonderheit der Figur 2b) im weiteren Verlauf eingegangen wird.

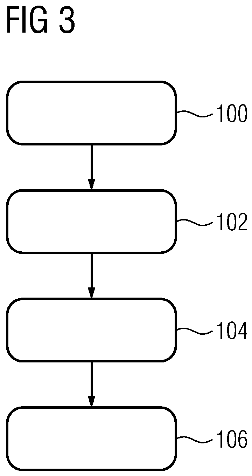

In der Figur 3 ist rein schematisch das Verfahren zum Instandsetzen eines gezahnten Getriebeelements 10 dargestellt. In Verfahrensschritt 100 wird das beschädigte Getriebeelement 10 bereitgestellt. In Verfahrensschritt 102 wird die Schnittkontur 14 festgelegt. In dem Reparaturfall der Figuren 1a) und 1b) verläuft die Schnittkontur 14 zwischen einem Grundkörper 16 des Getriebeelements 10 und dem einen Zahn 12. Hierbei setzt die Schnittkontur 14 beidseitig des Zahns 12 in dem jeweiligen Bereich des Zahnfußes 18 an, wobei insbesondere ein mittiges Ansetzen in dem jeweiligen Bereich des Zahnfußes 18 vorgesehen sein kann.

Bei dem in den Figuren 2a) und 2b) gezeigten Reparaturfall verläuft die Schnittkontur 14 entlang der jeweiligen Zahnflanke 20 bis zu dem jeweiligen Zahnkopf 22 der beiden benachbarten Zähne 12 erweitert wird und der Zahn 12 und die benachbarte Zahnflanken 20 entlang der Schnittkontur 14 entfernt werden. Die Schnittkontur 14 verläuft entlang der zumindest einen Zahnflanke 20 bis zur Mittelebene E des jeweiligen Zahns 12. Die Schnittkontur 14 wird bezogen auf eine Oberfläche 24 des zumindest einen Zahns 12 in einer Tiefe des Materials festgelegt, die einem Maß entspricht bis zu dem in einem zuvor durchgeführten Einsatzhärteprozess eine erhöhten Kohlenstoffkonzentration eingebracht wurde.

In Verfahrensschritt 104 wird der beschädigte Zahn 12 mittels eines Schneidverfahrens von dem Grundkörper 16 entlang der Schnittkontur 14 entfernt. Wenn mehr als ein Zahn 12 beschädigt ist, kann es auch zweckmäßig sein, dass diese mehreren beschädigten Zähne 12 entlang einer jeweiligen Schnittkontur 14 entfernt werden. Das Schneidverfahren kann als thermisches Schneiden, abtragendes Schneiden, abtragendes, mechanisches Schneiden oder Funkenerodieren durchgeführt werden.

In Verfahrensschritt 106 wird als Ersatz des zumindest einen entfernten Zahns 12 zumindest ein neuer Zahn mittels Auftragsschweißen gebildet. Der zumindest eine neue Zahn 12 weist mindestens einen mit einem ersten Material gebildeten Teilbereich sowie mindestens einen mit einem zweiten Material additiv gebildeten Randbereich auf, bei welchem das zweite Material eine größere Härte als das erste Material aufweist. Bei der in den Figuren 2a) und 2b) gezeigten Reparaturvariante ist entscheidend, dass bei einem spitz zulaufenden Zahnkopf 22 der Materialabtrag minimiert wird, um den Wärmeübertrag des Auftragsschweißprozesses auf die rückseitige Zahnflanke 20 minimiert wird, um damit die Enthärtung der rückseitigen Zahnflanke 201. zu minimieren

Mit dem Verfahren kann eine Einzelzahnreparatur mit gradierten Schichten zur Herstellung eines Härtegradienten an dem ersetzten Zahn ohne dedizierte Wärmebehandlung erfolgen.

### Bezugszeichenliste

- 10: Getriebeelement
- 12: Zahn
- 14: Schnittkontur
- 16: Grundkörper
- 18: Zahnfuß
- 20: Zahnflanke
- 22: Zahnkopf
- 24: Oberfläche

## Patentansprüche

1. Verfahren zum Instandsetzen eines mit einer Mehrzahl Zähnen (12) gezahnten Getriebeelements (10), bei dem
ein in einem Bereich zumindest eines Zahns (12) beschädigtes Getriebeelement (10) bereitgestellt wird,
eine Schnittkontur (14) festgelegt wird, die zumindest zwischen einem Grundkörper (16) des Getriebeelements (10) und dem zumindest einen Zahn (12) verläuft,
der zumindest eine Zahn (12) mittels eines Schneidverfahrens von dem Grundkörper (16) entlang der Schnittkontur (14) entfernt wird und
als Ersatz des zumindest einen entfernten Zahns (12) zumindest ein neuer Zahn mittels Auftragsschweißen gebildet wird.

2. Verfahren nach Anspruch 1, **gekennzeichnet durch** Ansetzen der Schnittkontur (14) beidseitig des zumindest einen Zahn (12) in dem jeweiligen Bereich des Zahnfußes (18).

3. Verfahren nach Anspruch 2, **gekennzeichnet durch** Ansetzen der Schnittkontur (14) mittig in dem jeweiligen Bereich des Zahnfußes (18).

4. Verfahren nach Anspruch 1, bei dem die Schnittkontur entlang zumindest einer Zahnflanke (20) bis zu einem Zahnkopf (22) eines benachbarten Zahns (14) erweitert wird und der Zahn (12) und die zumindest eine benachbarte Zahnflanke (20) entlang der Schnittkontur (14) entfernt wird.

5. Verfahren nach Anspruch 1 oder 4, bei dem die Schnittkontur (14) entlang der jeweiligen Zahnflanke (20) bis zu dem jeweiligen Zahnkopf (22) der beiden benachbarten Zähne (12) erweitert wird und der Zahn (12) und die benachbarte Zahnflanken (20) entlang der Schnittkontur (14) entfernt werden.

6. Verfahren nach Anspruch 5, bei dem die Schnittkontur entlang der zumindest einen Zahnflanke (20) bis zur Mittelebene (E) des jeweiligen Zahns (12) verläuft.

7. Verfahren nach einem der Ansprüche 1 bis 6, bei dem die Schnittkontur (14) bezogen auf eine Oberfläche (24) des zumindest einen Zahns (12) in einer Tiefe des Materials festgelegt wird, die einem Maß entspricht bis zu dem in einem zuvor durchgeführten Einsatzhärteprozess eine erhöhten Kohlenstoffkonzentration eingebracht wurde.

8. Verfahren nach einem der Ansprüche 1 bis 7, bei dem das Schneidverfahren als thermisches Schneiden, abtragendes Schneiden, abtragendes, mechanisches Schneiden oder Funkenerodieren durchgeführt wird.

9. Verfahren nach einem der Ansprüche 1 bis 8, bei dem der zumindest eine neue Zahn (12) mindestens einen mit einem ersten Material gebildeten Teilbereich sowie mindestens einen mit einem zweiten Material additiv gebildeten Randbereich aufweist, bei welchem das zweite Material eine größere Härte als das erste Material aufweist.

10. Getriebe mit mindestens einem nach einem der vorangegangenen Ansprüche instandgesetzten Getriebeelement (10).

11. Maschine, insbesondere elektrische Maschine (), vorzugsweise Generator und/oder Motor und/oder Elektromotor, mit einem Getriebe nach Anspruch 10.

12. Turbine, insbesondere Windkraftturbine () oder Gasturbine oder Fluggasturbine, mit einem Getriebe nach Anspruch 10 und/oder einer elektrischen Maschine nach Anspruch 11.
